# EUROPEAN PATENT APPLICATION

(11) **EP 4 538 870 A1**
(43) Date of publication of application: **16.04.2025**
(21) Application number: 23830411.7
(22) Date of filing: 29.06.2023
(51) Int. Cl.: G06F 8/70, G06F 8/65, G06F 8/71, G06F 9/445

(54) **APPLICATION MANAGEMENT METHOD, APPLICATION SUBSCRIPTION METHOD, AND RELATED DEVICE**

(30) Priority: 30.06.2022 CN 202210758111
(71) Applicant: Beijing Wellintech Co., Ltd., Beijing 100086 (CN)
(72) Inventor: LIN, Wei, Beijing 100086 (CN)
(74) Representative: Murgitroyd & Company
(86) International application number: PCT/CN2023/103865
(87) International publication number: WO 2024/002243

(57) **Abstract**

The present application relates to the technical field of software, and relates to an application management method, an application subscription method, and a related device. In the present application, a structural data model of a first application and a structural data model of a second application can be constructed first, and then a hierarchical relationship between the structural data model of the first application and the structural data model of the second application is established. In this way, unified management can be performed on the applications on the basis of the hierarchical relationship between the structural data model of the first application and the structural data model of the second application.

## Description

The present disclosure claims a priority to Chinese Patent Application No. 202210758111.3, filed on June 30, 2022, which is hereby incorporated by reference in its entirety.

### TECHNICAL FIELD

The present disclosure relates to the field of software technology, and in particular, to an application management method, an application subscription method and a related device.

### BACKGROUND

An application program (application, APP), also referred to as an application, refers to a computer program that is used to complete one or more specific tasks, which is able to run in a user mode to interact with a user, and may be provided with a visual user interface.

To meet the industry requirements, a function of a software system is becoming more and more complex. In order to reduce a complexity degree of the software system, the software system may be split into a plurality of applications. The plurality of APPs are able to cooperate with each other to complete the function of the software system.

Currently, in order to uniformly manage or configure the plurality of APPs, an app developer needs to manually configure each APP one by one, thereby resulting in low configuration efficiency.

### SUMMARY

The present disclosure provides an application management method, an application subscription method and a related device, which can improve the management or configuration efficiency for a plurality of APPs.

Technical solutions of the present disclosure are as follows.

In a first aspect, the present disclosure provides an application management method, where the method includes: constructing a structural data model of a first application and a structural data model of a second application, where a structural data model of an application includes program codes that are used to implement a function of the application; and establishing a hierarchical relationship between the structural data model of the first application and the structural data model of the second application.

Optionally, the hierarchical relationship between the structural data model of the first application and the structural data model of the second application is a first parent-child relationship; and the structural data model of the second application is a child model for the structural data model of the first application.

Optionally, the structural data model of the first application in the first parent-child relationship is a unique parent structural data model for the structural data model of the second application.

In some implementations, the method further includes: determining configuration information of the first application according to the structural data model of the first application, and determining configuration information of the second application according to the structural data model of the second application.

In some implementations, the above-mentioned method of "establishing a hierarchical relationship between the structural data model of the first application and the structural data model of the second application" specifically includes: establishing a hierarchical relationship between the structural data model of the first application and the configuration information of the second application.

Optionally, the hierarchical relationship between the structural data model of the first application and the configuration information of the second application is a second parent-child relationship; and the structural data model of the first application includes the configuration information of the second application.

Optionally, the structural data model of the first application in the second parent-child relationship is a unique parent structural data model for the configuration information of the second application.

In some implementations, the above-mentioned method of "establishing a hierarchical relationship between the structural data model of the first application and the structural data model of the second application" specifically includes: establishing a hierarchical relationship between the configuration information of the first application and the configuration information of the second application.

Optionally, the hierarchical relationship between the configuration information of the first application and the configuration information of the second application is established.

Optionally, the configuration information of the first application in the third parent-child relationship is unique parent configuration information for the configuration information of the second application.

Optionally, the configuration information of the second application includes configuration information in a plurality of levels, and configuration information in each level of configuration information in the plurality of levels has unique parent configuration information.

Optionally, the configuration information in each level of configuration information in the plurality of levels has unique identifier information.

Optionally, the second application includes applications in a plurality of levels, the second application is a parent application for the applications in the plurality of levels, and an application in each level of the plurality of levels has a unique parent application.

Optionally, the applications in the plurality of levels include a third application and a fourth application, and the third application is a parent application for the fourth application.

Optionally, the configuration information of the first application includes one or more of: identifier information of the first application or a version number of the first application.

Optionally, the configuration information of the first application includes an attribute, and the attribute includes one or more of: a name of the first application, identifier information of the configuration information of the first application, identifier information and a version number of the structural data model of the first application, or a configuration parameter value in the configuration information of the first application.

Optionally, the version number of the structural data model of the first application is different from a version number of the structural data model of the second application.

In some implementations, the method further includes: establishing a change relationship between the version number of the structural data model of the first application and the version number of the structural data model of the second application; where the change relationship includes: in a case where the version number of the structural data model of the second application changes, changing the version number of the structural data model of the first application.

Optionally, the identifier information of the first application is different from the identifier information of the second application.

In some implementations, the method further includes: receiving modification information, where the modification information is used to indicate that modification is performed on the configuration information of the second application; and updating the configuration information of the first application according to the modification information.

In a second aspect, the present disclosure provides an application management apparatus, where the apparatus may be used to implement the application management method as described in the first aspect and any possible implementation of the first aspect. Functions of the apparatus may be implemented by hardware, or by hardware executing corresponding software. The hardware or software includes one or more modules or units corresponding to steps in the application management method described in the first aspect and any possible implementation of the first aspect.

For example, the apparatus includes: a construction module, configured to construct a structural data model of a first application and a structural data model of a second application, where a structural data model of an application includes program codes that are used to implement a function of the application; and an establishment module, configured to establish a hierarchical relationship between the structural data model of the first application and the structural data model of the second application.

Optionally, the hierarchical relationship between the structural data model of the first application and the structural data model of the second application is a first parent-child relationship; the structural data model of the second application is a child model for the structural data model of the first application.

Optionally, the structural data model of the first application in the first parent-child relationship is a unique parent structural data model for the structural data model of the second application.

In some implementations, the apparatus further includes: a determination module, configured to determine configuration information of the first application according to the structural data model of the first application, and determine configuration information of the second application according to the structural data model of the second application.

In some implementations, the establishment module is specifically configured to establish a hierarchical relationship between the structural data model of the first application and configuration information of the second application.

Optionally, the hierarchical relationship between the structural data model of the first application and the configuration information of the second application is a second parent-child relationship; the structural data model of the first application includes the configuration information of the second application.

Optionally, the structural data model of the first application in the second parent-child relationship is a unique parent structural data model for the configuration information of the second application.

In some implementations, the establishment module is specifically configured to establish a hierarchical relationship between configuration information of the first application and configuration information of the second application.

Optionally, the hierarchical relationship between the configuration information of the first application and the configuration information of the second application is established.

Optionally, the configuration information of the first application in the third parent-child relationship is unique parent configuration information for the configuration information of the second application.

Optionally, the configuration information of the second application includes configuration information in a plurality of levels, and configuration information in each level of configuration information in the plurality of levels has unique parent configuration information.

Optionally, the configuration information in each level of configuration information in the plurality of levels has unique identifier information.

Optionally, the second application includes applications in a plurality of levels, the second application is a parent application for the applications in the plurality of levels, and an application in each level of the plurality of levels has a unique parent application.

Optionally, the applications in the plurality of levels include a third application and a fourth application, and the third application is a parent application for the fourth application.

Optionally, the configuration information of the first application includes one or more of: identifier information of the first application or a version number of the first application.

Optionally, the configuration information of the first application includes an attribute, and the attribute includes one or more of: a name of the first application, identifier information of the configuration information of the first application, identifier information and a version number of the structural data model of the first application, or a configuration parameter value in the configuration information of the first application.

Optionally, the version number of the structural data model of the first application is different from a version number of the structural data model of the second application.

In some implementations, the establishment module is specifically configured to establish a change relationship between the version number of the structural data model of the first application and the version number of the structural data model of the second application; where the change relationship includes: in a case where the version number of the structural data model of the second application changes, changing the version number of the structural data model of the first application.

Optionally, the identifier information of the first application is different from the identifier information of the second application.

In some implementations, the apparatus further includes: a receiving module, configured to receive modification information, where the modification information is used to indicate that modification is performed on the configuration information of the second application; and an update module, configured to update the configuration information of the first application according to the modification information.

In a third aspect, the present disclosure provides an electronic device, where the electronic device includes: a processor, and a memory for storing instructions executable by the processor; where the processor is configured to execute the instructions, to enable the electronic device to implement the methods as described in the first aspect and any possible implementation of the first aspect.

In a fourth aspect, the present disclosure provides a computer-readable storage medium, where computer program instructions are stored on the computer-readable storage medium; where the computer program instructions are executed by an electronic device, to enable the electronic device to implement the methods as described in the first aspect and any possible implementation of the first aspect.

In a fifth aspect, the present disclosure provides a computer program product, including computer-readable codes, or non-volatile computer-readable storage medium carrying the computer-readable codes, where when the computer-readable codes are executed in an electronic device, a processor in the electronic device implements the methods as described in the first aspect and any possible implementation of the first aspect.

In a sixth aspect, the present disclosure provides an application subscription method, where the method includes: constructing a structural data model of a first application and a structural data model of a second application, where a structural data model of an application includes program codes of the application, and the program codes of the application are used to implement a function of the application; establishing a hierarchical relationship between the structural data model of the first application and the structural data model of the second application; receiving subscription information that is used to subscribe information of the first application; and in a case where the information of the first application is updated, sending notification information that is related to update information of the first application and/or the second application.

In some implementations, the hierarchical relationship between the structural data model of the first application and the structural data model of the second application is a first parent-child relationship, and the structural data model of the second application is a child model for the structural data model of the first application; the structural data model of the first application in the first parent-child relationship is a unique parent structural data model for the structural data model of the second application. The above-mentioned method of "sending notification information that is related to update information of the first application and/or the second application" specifically includes: determining update information of the structural data model of the second application according to identifier information of the structural data model of the first application; and sending the update information of the first application and the update information of the structural data model of the second application.

In some implementations, the method further includes: determining configuration information of the first application according to the structural data model of the first application, and determining configuration information of the second application according to the structural data model of the second application.

In some implementations, the above-mentioned method of "establishing a hierarchical relationship between the structural data model of the first application and the structural data model of the second application" specifically includes: establishing a hierarchical relationship between the structural data model of the first application and the configuration information of the second application.

In some implementations, the hierarchical relationship between the structural data model of the first application and the configuration information of the second application is a second parent-child relationship; the structural data model of the first application includes the configuration information of the second application; the structural data model of the first application in the second parent-child relationship is a unique parent structural data model for the configuration information of the second application; where the above-mentioned method of "sending notification information that is related to update information of the first application and/or the second application" specifically includes: determining update information of the configuration information of the second application according to identifier information of the structural data model of the first application; and sending update information of the structural data model of the first application and the update information of the configuration information of the second application.

In some implementations, the above-mentioned method of "establishing a hierarchical relationship between the structural data model of the first application and the structural data model of the second application" specifically includes: establishing a hierarchical relationship between the configuration information of the first application and the configuration information of the second application.

In some implementations, the hierarchical relationship between the configuration information of the first application and the configuration information of the second application is a third parent-child relationship; the configuration information of the second application is child configuration information for the configuration information of the first application; the configuration information of the first application in the third parent-child relationship is unique parent configuration information for the configuration information of the second application; where the above-mentioned method of "sending notification information that is related to update information of the first application and/or the second application" specifically includes: determining the configuration information of the first application according to identifier information of the structural data model of the first application; determining the configuration information of the second application based on the configuration information of the first application; determining update information of the configuration information of the second application, and sending update information of the configuration information of the first application and the update information of the configuration information of the second application.

Optionally, update information includes one or more of: addition information, modification information or deletion information of a structural data model and/or configuration information.

In some implementations, the method further includes: receiving query information that is used to query states of the first application and the second application; sending information of the states of the first application and the second application; where a state of an application includes any one of: an establishment state, a running state or a termination state of a structural data model or configuration information of the application.

In some implementations, the above-mentioned method of "querying information of the first application" specifically includes: searching for a state of the structural data model of the second application according to identifier information of the structural data model of the first application.

In some implementations, the above-mentioned method of "querying information of the first application" specifically includes: searching for a state of configuration information of the first application according to identifier information of the structural data model of the first application; or searching for a state of configuration information of the second application according to identifier information of the structural data model of the first application.

In some implementations, the above-mentioned method of "querying information of the first application" specifically includes: determining configuration information of the first application according to identifier information of the structural data model of the first application; searching for a state of configuration information of the second application based on the configuration information of the first application.

In a seventh aspect, the present disclosure provides an application subscription apparatus, where the apparatus may be used to implement the application subscription methods as described in the sixth aspect and any possible implementation of the sixth aspect. Functions of the apparatus may be implemented by hardware, or by hardware executing corresponding software. The hardware or software includes one or more modules or units corresponding to steps in the application management methods described in the sixth aspect and any possible implementation of the sixth aspect.

For example, the apparatus includes: a construction module, configured to construct a structural data model of a first application and a structural data model of a second application, where a structural data model of an application includes program codes of the application, and the program codes of the application are used to implement a function of the application; an establishment module, configured to establish a hierarchical relationship between the structural data model of the first application and the structural data model of the second application; a receiving module, configured to receive subscription information that is used to subscribe information of the first application; a sending module, configured to send, in a case where the information of the first application is updated, notification information that is related to update information of the first application and/or the second application.

In some implementations, the hierarchical relationship between the structural data model of the first application and the structural data model of the second application is a first parent-child relationship, and the structural data model of the second application is a child model for the structural data model of the first application; the structural data model of the first application in the first parent-child relationship is a unique parent structural data model for the structural data model of the second application. The sending module is specifically configured to determine update information of the structural data model of the second application according to identifier information of the structural data model of the first application; and send the update information of the first application and the update information of the structural data model of the second application.

In some implementations, the apparatus further includes a determination module, configured to determine configuration information of the first application according to the structural data model of the first application, and determine configuration information of the second application according to the structural data model of the second application.

In some implementations, the establishment module is specifically configured to: establish a hierarchical relationship between the structural data model of the first application and the configuration information of the second application.

In some implementations, the hierarchical relationship between the structural data model of the first application and the configuration information of the second application is a second parent-child relationship; the structural data model of the first application includes the configuration information of the second application; the structural data model of the first application in the second parent-child relationship is a unique parent structural data model for the configuration information of the second application; where the sending module is specifically configured to: determine update information of the configuration information of the second application according to identifier information of the structural data model of the first application; and send update information of the structural data model of the first application and the update information of the configuration information of the second application.

In some implementations, the establishment module is specifically configured to: establish a hierarchical relationship between the configuration information of the first application and the configuration information of the second application.

In some implementations, the hierarchical relationship between the configuration information of the first application and the configuration information of the second application is a third parent-child relationship; the configuration information of the second application is child configuration information for the configuration information of the first application; the configuration information of the first application in the third parent-child relationship is unique parent configuration information for the configuration information of the second application; where the sending module is specifically configured to: determine configuration information of the first application according to identifier information of the structural data model of the first application; determine the configuration information of the second application based on the configuration information of the first application; determine update information of the configuration information of the second application, and send update information of the configuration information of the first application and the update information of the configuration information of the second application.

Optionally, update information includes one or more of: addition information, modification information or deletion information of a structural data model and/or configuration information.

In some implementations, the receiving module is specifically configured to: receive query information that is used to query states of the first application and the second application; send information of the states of the first application and the second application; where a state of an application includes any one of: an establishment state, a running state or a termination state of a structural data model or configuration information of the application.

In some implementations, the apparatus may further include a querying module, configured to: search for a state of the structural data model of the second application according to identifier information of the structural data model of the first application.

In some implementations, the querying module is specifically configured to: search for a state of configuration information of the first application according to identifier information of the structural data model of the first application; or search for a state of configuration information of the second application according to identifier information of the structural data model of the first application.

In some implementations, the querying module is specifically configured to: determine configuration information of the first application according to identifier information of the structural data model of the first application; search for a state of configuration information of the second application based on the configuration information of the first application.

In an eighth aspect, the present disclosure provides an electronic device, including: a processor, and a memory for storing instructions executable by the processor; where the processor is configured to execute the instructions, to enable the electronic device to implement the methods as described in the sixth aspect and any possible implementation of the sixth aspect.

In a ninth aspect, the present disclosure provides a computer-readable storage medium, where computer program instructions are stored on the computer-readable storage medium; where the computer program instructions are executed by an electronic device, to enable the electronic device to implement the methods as described in the sixth aspect and any possible implementation of the sixth aspect.

In a tenth aspect, the present disclosure provides a computer program product, including computer-readable codes, or non-volatile computer-readable storage medium carrying the computer-readable codes, where when the computer-readable codes are executed in an electronic device, a processor in the electronic device implements the methods as described in the sixth aspect and any possible implementation of the sixth aspect.

Based on any one of the first aspect to the tenth aspect above, the present disclosure has at least the following beneficial effects.

In the present disclosure, a tree-like structure between the first application and the second application may be constructed by establishing the hierarchical relationship between the structural data model of the first application and the structural data model of the second application. Based on the hierarchical relationship between the first application and the second application in the tree-like structure, the deployment for the second application may be controlled when the first application is deployed, thereby achieving the unified deployment for a plurality of applications. At the same time, based on the hierarchical relationship between the first application and the second application, when the structural data model of the first application is run, the structural data model of the second application may be called, thereby achieving unified management for the plurality of applications. Moreover, there is no need to develop installers specifically for the plurality of applications, thereby reducing the development cost. In addition, developers do not need to configure a script for each of the plurality of applications one by one, thereby improving the configuration efficiency.

It should be understood that the general description above and the detailed description below are only illustrative and exemplary, and cannot limit the present disclosure.

### BRIEF DESCRIPTION OF THE DRAWINGS

The accompanying drawings herein are incorporated into the specification and constitute a part of the specification to illustrate embodiments consistent with the present disclosure, which are used to explain the principles of the present disclosure together with the specification, and do not constitute improper limitations on the present disclosure.
FIG. 1 is a flow diagram of an application management method provided in the embodiments of the present disclosure.
FIG. 2 is a schematic diagram of a hierarchical relationship between structural data models of a plurality of applications provided in the embodiments of the present disclosure.
FIG. 3 is a schematic diagram of a hierarchical relationship between configuration information of an application and a structural data model of the application provided in the embodiments of the present disclosure.
FIG. 4 is a schematic diagram of a hierarchical relationship between structural data models of a plurality of applications provided in the embodiments of the present disclosure.
FIG. 5 is a flow diagram of another application management method provided in the embodiments of the present disclosure.
FIG. 6 is a flow diagram of yet another application management method provided in the embodiments of the present disclosure.
FIG. 7 is a flow diagram of yet another application management method provided in the embodiments of the present disclosure.
FIG. 8 is a flow diagram of yet another application management method provided in the embodiments of the present disclosure.
FIG. 9 is a schematic diagram of a relationship between a structural data model of an application and a predefinition of the application provided in the embodiments of the present disclosure.
FIG. 10 is a schematic diagram of a type of a structural data model of an application provided in the embodiments of the present disclosure.
FIG. 11 is a structural diagram of a structural data model of an application provided in the embodiments of the present disclosure.
FIG. 12 is a schematic diagram of a hierarchical relationship between a plurality of applications provided in the embodiments of the present disclosure.
FIG. 13 is a schematic diagram of another hierarchical relationship between a plurality of applications provided in the embodiments of the present disclosure.
FIG. 14 is a flow diagram of an application subscription method provided in the embodiments of the present disclosure.
FIG. 15 is a flow diagram of another application subscription method provided in the embodiments of the present disclosure.
FIG. 16 is a structural diagram of an application management apparatus provided in the embodiments of the present disclosure.
FIG. 17 is a structural diagram of an application subscription apparatus provided in the embodiments of the present disclosure.

### DETAILED DESCRIPTION

In order to enable those skilled in the art to better understand the technical solutions in the present disclosure, the technical solutions in the embodiments of the present disclosure will be described clearly and completely in conjunction with the accompanying drawings.

It should be noted that terms "first" and "second", etc., in the specification, claims and the above-mentioned drawings of the present disclosure are used for distinguishing between similar objects, but not necessarily used for describing a particular order or precedence order. It should be understood that such used terms are interchangeable under appropriate circumstances, such that the embodiments of the present disclosure described herein are capable of being practiced in a sequence in addition to those illustrated or described herein. The implementations described in the following exemplary embodiments do not represent all implementations consistent with the present disclosure, and rather, are merely examples of apparatus and methods consistent with some aspects of the present disclosure as described in detail in the appended claims.

It should also be understood that the term "comprise/include" and variations thereof indicate the presence of described features, integers, steps, operations, elements and/or components, but do not exclude the presence or addition of one or more other features, integers, steps, operations, elements and/or components.

"And/or" is used to illustrate an association relationship between associated objects, which represents that there may be three kinds of relationships. For example, A and/or B may represent these three conditions: A exists alone, both A and B exist, or B exists alone. A character "/" generally means that there is an "or" relationship between related objects before and after the character "/".

A software system refers to a computer software system composed of a system software, a supporting software and an application software, which is a portion composed of software in a computer system.

To meet the industry requirements, a function of the software system is becoming more and more complex. In order to reduce the complexity degree of the software system, the software system may be split into a plurality of APPs. The plurality of APPs are able to cooperate with each other, to complete the function of the software system.

Currently, in order to perform uniform management (such as distribution, deployment, or monitoring) on the plurality of APPs, scripts for the plurality of APPs may be configured manually or through a dedicated installer.

Specifically, when the plurality of APPs are installed, the APPs' program files may be installed into a designated directory through the dedicated installer, thereby automatically completing the APPs' configuration and initialization. Manually configuring scripts for the plurality of APPs may refer to that a developer manually configure each APP based on an installation manual, or edit a dedicated configuration script for the plurality of APPs. Based on the configuration script, an APP may be installed. In addition, when a configuration parameter of the APP needs to be modified, the configuration script needs to be manually modified.

However, the dedicated installer needs to be developed specifically for the APP, and thus, the cost is high. The method of manually configuring the scripts for the plurality of APPs also requires a developer to configure and install each of the plurality of APPs one by one, which is inefficient. In addition, as APPs gradually become platformized (a platform may provide development environment supporting, transaction supporting, and unified deployment supporting for the APPs), methods of configuring the scripts for APPs manually and through the installer cannot meet the trend of APP platformization.

Based on this, the embodiments of the present disclosure provide an application management method, which may be applied to a development system. By establishing a hierarchical relationship between the plurality of APPs, the plurality of APPs may be uniformly managed/deployed based on the hierarchical relationship between the plurality of APPs, thereby improving the configuration efficiency of the APPs.

For example, the method may be implemented on a hardware device corresponding to the development system. For example, the hardware device may include a server, a computer, etc. Herein, the server may be a single server, or a server cluster composed of multiple servers. In some implementations, the server cluster may be a distributed cluster. A specific implementation of the hardware device corresponding to the development system is not limited in the present disclosure. It should be noted that implementing steps for a development system side involved in the embodiments of the present disclosure may all be implemented by the hardware device corresponding to the development system.

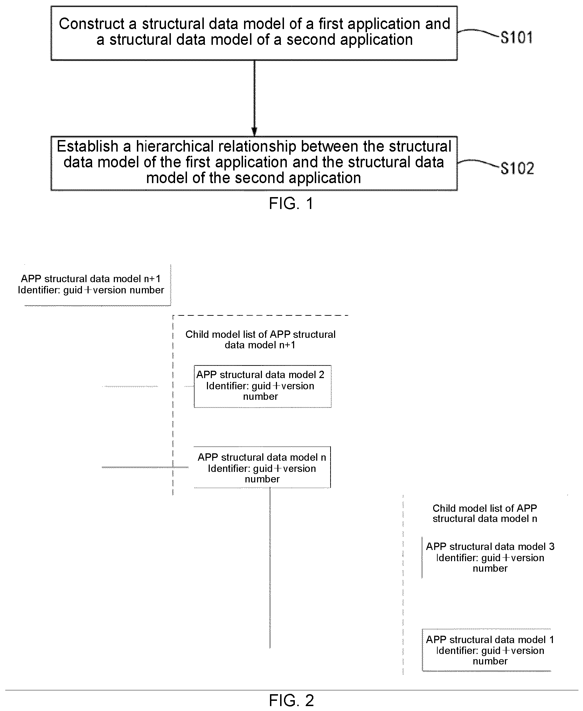

FIG. 1 is a flow diagram of an application management method provided in the embodiments of the present disclosure. As shown in FIG. 1, the application management method may include S101 to S102.

In S101, a structural data model of a first application and a structural data model of a second application are constructed.

Herein, a structural data model of an application may include program codes of the application. For example, the structural data model of the first application may include program codes of the first application, and the second application may include program codes of the second application. The program codes of the application may be used to implement a function of the application.

In a possible implementation, a development system may construct a structural data module of the application by interacting with a device in a development studio of the application.

For example, a structural data model development system of the application may actively acquire the structural data model of the application from a device of the development studio of the application.

Herein, the first application and the second application may be applications developed by the same development studio or may be applications developed by different development studios.

In an example, the development system may send request information to a device of the development studio of the application, where the request information is used to request to acquire the structural data model of the application. After the request information from the development system is received, the development studio of the application may upload the structural data model of the application.

In another possible implementation, after the structural data model of the application is constructed, the development studio of the application may also actively upload the structural data model of the application to the development system.

For example, the device of the development studio may send the structural data model of the application to the development system in response to an upload operation.

In another example, the development system may first acquire information for constructing the structural data model of the application. For example, the information may include configuration information, assemblies, etc., of the application. Based on this information, the development system may construct the structural data model of the application. For example, the development system may construct the structural data model of the first application according to configuration information of the first application, and construct the structural data model of the second application according to configuration information of the second application.

In S102, a hierarchical relationship between the structural data model of the first application and the structural data model of the second application is established.

Herein, a hierarchical relationship between structural data models may represent an association relationship between applications. For example, a hierarchical relationship may include a parent-child relationship, a superior-subordinate relationship, a parallel relationship, etc.

In an example, taking the hierarchical relationship between structural data models as a parent-child relationship as an example, the hierarchical relationship between the structural data model of the first application and the structural data model of the second application may be a first parent-child relationship. In the first parent-child relationship, the structural data model of the second application may be a child model for the structural data model of the first application, and the structural data model of the first application is a unique parent structural data model for the structural data model of the second application.

Herein, in a case where the structural data model of the first application is running, the structural data model of the second application may be called, or the first application is able to control a life cycle of the second application. A life cycle of an application may refer to a process from program codes to a program entity for the application. For another example, a function that may be implemented by the structural data model of the second application is a first function. In a case where the first application does not include codes for implementing the first function, the first function may also be implemented by calling the second application.

It should be noted that, in the embodiments of the present disclosure, a parent structural data model may include a plurality of child structural data models. For example, the structural data model of the first application may also include other structural data models in addition to the structural data model of the second application. A child structural data model has a unique parent structural data model. Of course, the child structural data model may also include other child structural data models. For example, the structural data model of the second application may also include structural data models in a plurality of levels. A structural data model at each level corresponds to an application.

For example, a child model for the structural data model of the second application may also include a structural data model of a third application and a structural data model of a fourth application. The third application and the fourth application may be in a parent-child relationship. For example, the structural data model of the third application is a parent model for the structural data model of the fourth application. Of course, the third application and the fourth application may be in a parallel relationship, for example, the structural data model of the third application and the structural data model of the fourth application are both child structural data models of the second application.

Alternatively, the structural data model of the second application may further include structural data models in a plurality of levels, which may also be described as that the second application may further include applications in a plurality of levels. The applications in the plurality of levels may include the third application and the fourth application. The third application may be a parent application for the fourth application.

In an example, as shown in FIG. 2, a child model list for a structural data model (an APP structural data model n+1) of an application n+1 may include a structural data model (an APP structural data model 2) of an application 2 and a structural data model (an APP structural data model n) of an application n. A child model list of the structural data model of the application n may include a structural data model (an APP structural data model 1) of an application 1 and a structural data model (an APP structural data model 3) of an application 3.

In a possible implementation, after the development system acquires the structural data model of the first application and the structural data model of the second application, the structural data model of the second application may be used as a portion of the structural data model of the first application, so that when the structural data model of the first application is running, the structural data model of the second application may be used.

In the embodiments of the present disclosure, by establishing the hierarchical relationship between the structural data model of the first application and the structural data model of the second application, a structure tree (tree-like structure) between the first application and the second application may be constructed. Based on the hierarchical relationship between the first application and the second application in the tree-like structure, the deployment for the second application may be controlled when the first application is deployed, thereby achieving the unified deployment for a plurality of APPs. At the same time, based on the hierarchical relationship between the first application and the second application, when the structural data model of the first application is running, the structural data model of the second application may be called, thereby achieving the unified management for the plurality of APPs. Moreover, there is no need to develop an installer specifically for the plurality of applications, which reduces the development cost. In addition, a developer do not need to configure scripts for respective applications one by one, which improves the configuration efficiency.

In the present disclosure, in a case where the structural data model of the second application is a child model for the structural data model of the first application, the second application may be considered as a child application for the first application, but the program codes of the second application is independent from the first application.

An implementing method for establishing the hierarchical relationship between the structural data model of the first application and the structural data model of the second application is illustrated exemplarily as follows.

In a possible implementation, in a case where the hierarchical relationship is a parent-child relationship, in order to establish the first parent-child relationship between the structural data model of the first application and the structural data model of the second application, configuration information of the first application may be determined according to the structural data model of the first application, and configuration information of the second application may be determined according to the structural data model of the second application. Then the hierarchical relationship between the structural data model of the first application and the structural data model of the second application may refer to a hierarchical relationship between the structural data model of the first application and the configuration information of the second application, or a hierarchical relationship between the configuration information of the first application and the structural data model of the second application, or a hierarchical relationship between the configuration information of the first application and the configuration information of the second application.

Herein, configuration information of an application may be used to configure an attribute value of a structural data model of the application.

For example, the configuration information of the application may include one or more of: identifier information of the application or a version number of the application. The configuration information of the application may also be an attribute of the application. For example, the attribute of the application may include one or more of: a name of the application, identifier information of the configuration information of the application, identifier information and a version number of the structural data model of the application, or a configuration parameter value in the configuration information of the application.

For example, the configuration information of the first application may include one or more of: identifier information of the first application or a version number of the first application. An attribute of the configuration information of the first application may include one or more of: a name of the first application, identifier information of the configuration information of the first application, identifier information and a version number of the structural data model of the first application, or a configuration parameter value in the configuration information of the first application.

It should be noted that in the embodiments of the present disclosure, version numbers of structural data models of different applications are different. Pieces of identifier information of different applications are also different. For example, the version number of the structural data model of the first application is different from a version number of the structural data model of the second application. The identifier information of the first application and identifier information of the second application are also different.

Methods for establishing the hierarchical relationship between the structural data model of the first application and the configuration information of the second application, the hierarchical relationship between the configuration information of the first application and the structural data model of the second application, and the hierarchical relationship between the configuration information of the first application and the configuration information of the second application are illustrated respectively as follows.
1. Establishing a hierarchical relationship between the structural data model of the first application and the configuration information of the second application.

Herein, the hierarchical relationship between the structural data model of the first application and the configuration information of the second application is a second parent-child relationship. The structural data model of the first application may include the configuration information of the second application. Of course, the structural data model of the first application may also include configuration information of other applications. In the second parent-child relationship, the structural data model of the first application is a unique parent structural data model for the configuration information of the second application.

In an example, after the structural data model of the first application is established according to the configuration information of the first application, the configuration information of the second application may be used as information in a configuration script of the structural data model of the first application, or a field capable of calling the configuration information of the second application may be added to the structural data model of the first application. Therefore, the hierarchical relationship between the structural data model of the first application and the configuration information of the second application may be established. In this way, when the structural data model of the first application is running, the configuration information of the second application may be called.

2. Establishing a hierarchical relationship between the configuration information of the first application and the structural data model of the second application.

Herein, the hierarchical relationship between the configuration information of the first application and the structural data model of the second application may refer to that the structural data model of the second application may be controlled/managed through the configuration information of the first application. For example, a state of the structural data model of the second application may be controlled. A state may include starting running, terminating running, interrupting running, etc.

In an example, configuration information corresponding to the structural data model of the second application may be written into the configuration information of the first application, thereby establishing a parent-child relationship between the configuration information of the first application and the structural data model of the second application. For example, the configuration information of the structural data model of the second application or identifier information of the configuration information of the structural data model of the second application may be added to a configuration information list of the first application, to obtain the configuration information of the first application. The configuration information list of the first application may include a configuration parameter for establishing the structural data model of the first application. In this way, when the development system uses the configuration information of the first application to establish the structural data model of the first application, the structural data model of the first application may be established according to the configuration parameter in the configuration information list of the first application (including the configuration information or identifier information of the structural data model of the second application).

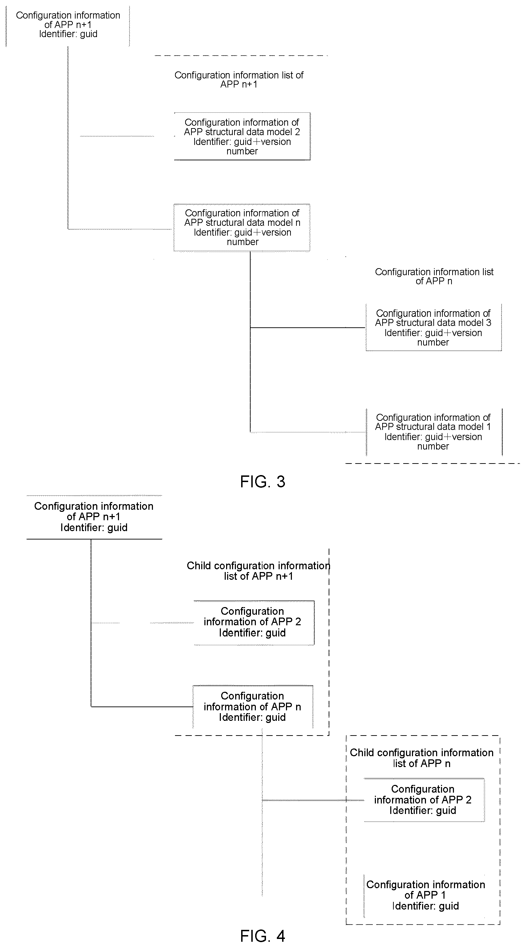

For example, in combination with FIG. 2, as shown in FIG. 3, FIG. 3 shows a hierarchical relationship between configuration information of an application and a model of the application. In FIG. 3, each configuration information may include a plurality of child configuration information. The each configuration information may have unique identifier information. Pieces of identifier information of the configuration information of different applications are different.

3. Establishing a hierarchical relationship between the configuration information of the first application and the configuration information of the second application.

Herein, the hierarchical relationship between the configuration information of the first application and the configuration information of the second application is a third parent-child relationship. In the third parent-child relationship, the configuration information of the first application is unique parent configuration information for the configuration information of the second application. The configuration information of the first application may also be parent configuration information for configuration information of other applications.

In an example, after respective configuration information of the first application and the second application is determined, the configuration information of the second application may be used as child configuration information for the configuration information of the first application, that is, the hierarchical relationship between the configuration information of the first application and the configuration information of the second application is established. For example, identifier information of the configuration information of the second application may be added to the configuration information of the first application, or a field that may indicate the configuration information of second application may be added to the configuration information of the first application, or the configuration information of the second application may be used as child configuration information in the configuration information of the first application, thereby establishing the hierarchical relationship (a parent-child relationship) between the configuration information of the first application and the configuration information of the second application.

For example, in combination with FIG. 2, as shown in FIG. 4, FIG. 4 shows a hierarchical relationship between configuration information of a plurality of applications. In FIG. 4, configuration information of a parent application may have a child configuration information list. The child configuration information list may include a plurality of child configuration information or identifier information of the plurality of child configuration information. A piece of child configuration information corresponds to an application.

In this way, when the second application is deployed, the configuration information of the second application may be obtained by querying the identifier information of the configuration information of the second application or the field that may indicate the configuration information of the second application included in the configuration information of the first application, and then, the configuration information of the first application and the configuration information of the second application may be deployed together.

In some implementations, the second application may include applications in a plurality of levels, the second application is a parent application for the applications in the plurality of levels, and an application in each level of the plurality of levels has a unique parent application.

For example, the applications in the plurality of levels may include a third application and a fourth application. The third application may be a parent application for the fourth application. In this way, a tree-like structure between the plurality of applications may be constructed.

Based on the foregoing embodiments, the embodiments of the present disclosure further provide an application management method, which may be used to establish the hierarchical relationship between the structural data model of the first application and the structural data model of the second application. In an implementation, developers of the first application and the second application are the same, and the developer may develop the first application and the second application locally, and create the structural data model of the first application and the structural data model of the second application. Then, the configuration information of the first application is created based on the structural data model of the first application, and the configuration information of the second application is created based on the structural data model of the second application, and an attribute value of the structural data model of the second application is configured in the configuration information of the second application, to obtain configuration information of the personalized application (also called a part APP). Finally, the configuration information of the second application is added to the configuration information of the first application, to establish a parent-child relationship between the structural data model of the first application and the structural data model of the second application.

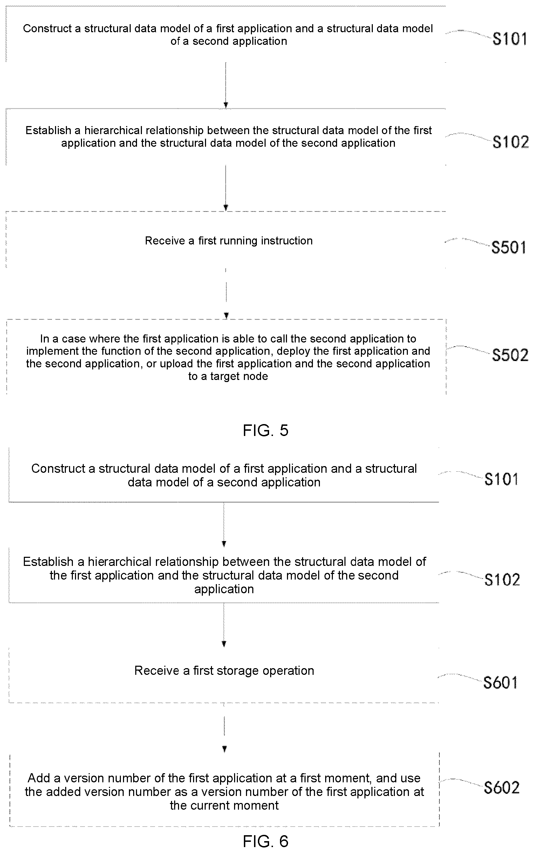

After the hierarchical relationship between the structural data model of the first application and the structural data model of the second application is constructed, in order to test whether the hierarchical relationship between the structural data model of the first application and the structural data model of the second application may be used normally, as shown in FIG. 5, the application management method provided in the embodiments of the present disclosure may further include S501 to S502.

In S501, a first running instruction is received.

Herein, the first running instruction may be used to test whether the first application is able to call the second application to implement a function of the second application.

For example, the first running instruction may be a first running instruction sent from a developer through a device corresponding to a development studio to a device where the development system is located. Correspondingly, the device where the development system is located may receive the first running instruction. In this way, the development system may run the first application to detect whether the structural data model of the second application may be called when the first application is running.

Furthermore, the first running instruction may also be used to indicate a running resource (such as a memory, a Central Processor/Central Processing Unit (CPU)), etc., for running the first application. In this way, the development system may run the first application according to the running resource indicated by the first running instruction.

In S502, in a case where the first application is able to call the second application to implement the function of the second application, the first application and the second application are deployed, or the first application and the second application is uploaded to a target node.

Herein, in a case where the first application is able to call the second application to implement the function of the second application, the hierarchical relationship/parent-child relationship between the first application and the second application may be used normally. In this way, the first application and the second application may be deployed and installed to establish functions of an application system corresponding to the first application and the second application. Alternatively, the first application and the second application may be uploaded to the target node. For example, the target node may be a device (such as a server) corresponding to an application store, so that other users are able to download the first application and the second application from the application store. Alternatively, the first application and the second application may be uploaded to the device corresponding to the application store in the form of the tree-like structure, so that the other users may determine an association relationship between the first application and the second application based on the tree-like structure, and based on the association relationship, the first application and the second application may be iteratively developed.

After the parent-child relationship between the structural data model of the first application and the structural data model of the second application is constructed, in order to ensure that the developer is able to determine a version number of an application at the current stage in a case where the first application and the second application is developed subsequently based on the parent-child relationship. Taking the first application as an example, as shown in FIG. 6, the method provided in the embodiments of the present disclosure may further S601 to S602.

In S601, a first storage operation is received.

Herein, the first storage operation may be used to indicate to store information of a running state of the first application at a current moment. The information of the running state of the first application may be used to indicate a running condition of the first application during a test running process of the first application, such as whether the first application runs normally, etc.

For example, the first storage operation may be an instruction sent from the developer through the device in the development studio to the device corresponding to the development system during a process of development and operation of the first application, or may be an operation performed directly by the developer on the device corresponding to the development system.

In S602, a version number of the first application at a first moment is added, and the added version number is used as a version number of the first application at the current moment.

Herein, the first moment is a previous moment of the current moment. For example, the first moment may be a moment where information for storing the running state of the first application is received before the current moment.

For example, the development system may add a first value based on a version number at the first moment to obtain the version number of the first application at the current moment. The first value may set as required, for example, may be 1, 2, etc., which is not limited.

Furthermore, when the version number of the first application is updated, the development system may replace the version number in the configuration information of the first application with the updated version number.

Based on this embodiment, during the running process of the application, the development system may automatically generate a version number of the application according to user requirements. At the same time, it is ensured that version numbers of the application are monotonically increased.

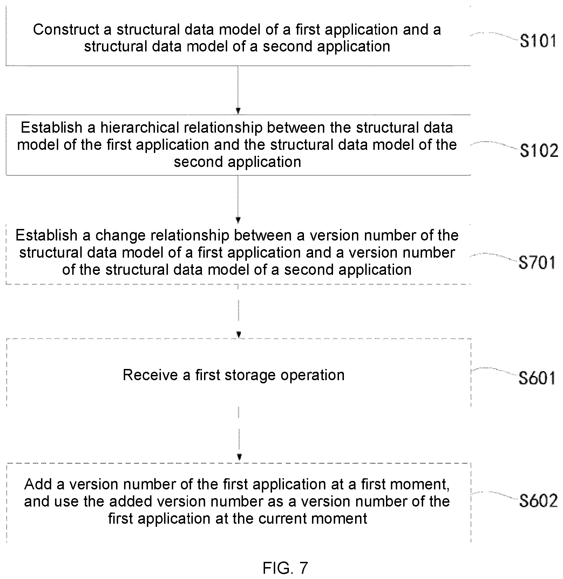

Further, in order to ensure that the version numbers of the plurality of applications with a hierarchical relationship is able to be updated synchronously, in combination with FIG. 6, and as shown in FIG. 7, the method provided in the embodiments of the present disclosure may further include S701.

In S701, a change relationship between a version number of the structural data model of a first application and a version number of the structural data model of a second application is established.

Herein, the change relationship may include: in a case where the version number of the structural data model of the second application changes, changing the version number of the structural data model of the first application.

In a possible implementation, when the development system detects that the version number of the structural data model of the second application has changed, a new version number may be generated based on a current version number of the first application, and a specific method thereof may refer to the above-mentioned method shown in FIG. 6.

Based on the technical solution in FIG. 7, in the embodiments of the present application, the development system may establish an update relationship between the version number of the structural data model of the first application and the version number of the structural data model of the second application, and there is a hierarchical relationship between the structural data model of the first application and the structural data model of the second application. Based on the update relationship, when the version number of the structural data model of the second application is updated, the development system updates the version number of the structural data model of the first application, thereby ensuring the synchronization of updating the version numbers of the structural data models of the first application and the second application.

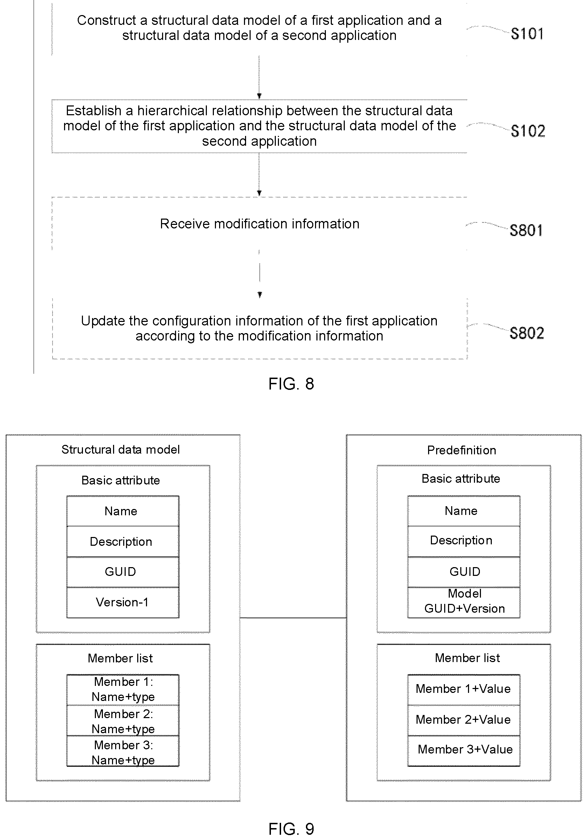

In a possible implementation, when the configuration information of the second application changes, for example, the second application is redeveloped by other developers, in order to timely update the configuration information of the second application included in the configuration information of the first application, as shown in FIG. 8, the method provided in this embodiment may further include S801 to S802.

In S801, modification information is received.

Herein, the modification information may be used to indicate that modification is performed on the configuration information of the second application. For example, first modification information may include modified configuration information of the second application, or the first modification information may include a first indicator. The first indicator may be used to indicate that the configuration information of the second application has been modified. For example, the first indicator may be a version number of the modified configuration information of the second application.

In an example, other developers may download the configuration information of the second application from the development system, and develop or debug the configuration information of the second application again to obtain updated configuration information of the second application. After the configuration information of the second application is developed or debugged, the other developers may upload the updated configuration information of the second application and the version number of the updated configuration information of the second application to the development system through the device of the development studio where the developers belong.

In S802, the configuration information of the first application is updated according to the modification information.

Herein, updating the configuration information of the first application may refer to replacing the configuration information of the second application included in the configuration information of the first application with the updated configuration information of the second application.

It can be seen from the above S801 and S802 that when there is an update for an application or an update for the configuration information of the application in the tree-like structure, the development system may update relevant applications in the tree-like structure in a timely manner.

The specific implementation of establishing the hierarchical relationship between the structural data model of the first application and the structural data model of the second application in S202 is exemplarily described as follows with reference to instances.

For example, the process of constructing the hierarchical relationship between the structural data model of the first application and the structural data model of the second application may be as follows.
1) A structural data model of the first application is established, and unique identifier information (such as a globally unique identifier) is assigned to the structural data model of the first application. For example, the developer of the first application may establish the structural data model of the first application in the development studio.
2) A data predefinition for the structural data model of the first application (referred to as a predefinition of the first application for short) is established, and an attribute value of the structural data model of the first application is configured in the predefinition of the first application.
   Herein, the predefinition may also be referred to as configuration information, or the predefinition may also include configuration information. The configuration information may refer to the above-mentioned description.
3) A child predefinition list for the structural data model of the first application is configured, and unique identifier information (such as a globally unique identifier) is assigned to the predefinition of the first application.
4) A structural data model of the second application is established, and unique identifier information (such as a globally unique identifier) is assigned to the structural data model of the second application. For example, the developer of the second application may establish the structural data model of the second application in the development studio.
5) A structural data model creates a structural data model data predefinition of the structural data model of the second application (referred to as a predefinition of the second application for short), and configures an attribute value of an APP model of the second application in the predefinition of the second application to obtain the configured predefinition of the second application.
6) The configured predefinition of the second application is added to the child predefinition list of the first application.

A concept of predefinition is mentioned in the present disclosure. The predefinition is a group of specific configuration values for attributes of a structural data model. The predefinition records configuration information of the structural data model. The predefinition is used to instantiate objects. Instantiating an object means constructing a structure of the object according to a structure of the object's model and taking a parameter value as an initial value of the object. The predefinition may also be referenced by other models as a child predefinition.

For example, when a structural data model is established, operations may include: building a new model, assigning a name and identifier information for the new model; adding a member, specifying a member type; deleting a member; adding or deleting a child predefinition; setting an initial value for the child predefinition; updating a model version; publishing a certain model version and generating predefinition, etc. When a predefinition is established, operations may include: specifying a model version and publishing (establishing) predefinition; assigning a name and identifier information for the predefinition; setting parameter values (attributes and members) for the predefinition, etc.

FIG. 9 is a schematic diagram of a relationship between a structural data model and a predefinition provided in embodiments of the present disclosure.

As shown in FIG. 9, the structural data model may include a basic attribute and a member list; the basic attribute may include information such as a name, a description, a globally unique identifier (globally unique identifier, GUID), a version, etc.; the member list may include information such as "member 1: name+type", "member 2: name+type", "member 3: name+type", etc.

The predefinition may include a basic attribute and a member list; the basic attribute may include information such as a type, a name, a description, a GUID, a model GUID+version, etc.; the member list may include information such as "member 1+value", "member 2+value", "member 3+value", etc.

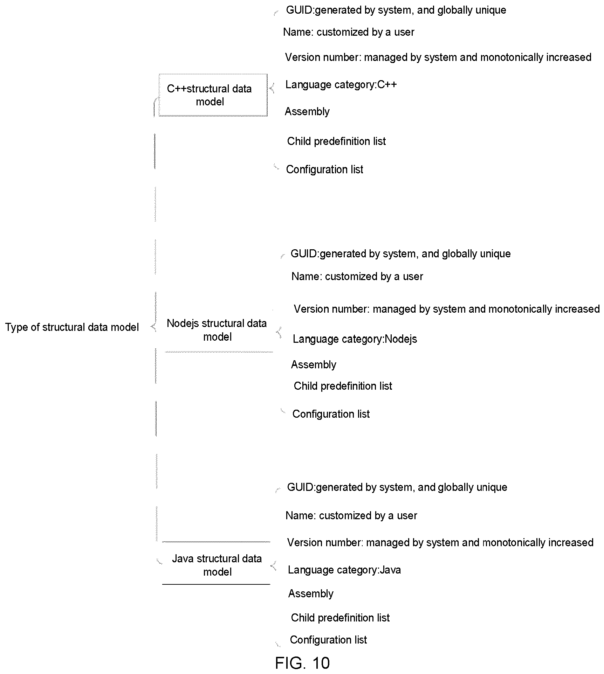

In an example, as shown in FIG. 10, a type of the structural data model may include a C++ structural data model, a Nodejs structural data model, a Java structural data model, etc.

Herein, different types of configuration information of the structural data model may be a GUID, a name, a version number, a language category, an assembly, a self-predefined list, and a configuration item list. These configuration information are described respectively as follows.
1. A GUID may be generated by the development system, and may be globally unique. A name may be customized by a user.
2. A version number may be managed by the development system, and consecutive version numbers may be monotonically increased, detailed description may refer to the description of S602 above. An assembly may include command lines, source codes, a runtime binary, etc.
3. A language category may refer to a programming language in which program codes are written. For example, a language category of the C++ structural data model is C++, a language category of the Nodejs structural data model is Nodejs, and a language category of the Java structural data model is Java.
4. An assembly, i.e., program codes, may include command lines, source codes, a binary, etc.

Herein, the command lines refer to command lines to be executed when the application is loaded and run, for example, a name of the program to be started, a command parameter to be passed in, a registration commands, etc.

The source codes may refer to source codes and resource files used (may be null). Other users may purchase an original license to view and use the source codes. The source codes may include C++ source codes, Nodejs's JavaScript source codes, Java source codes, etc.

The runtime binary may include a binary program package. Since C++ is not cross-platform, the binary of the assembly of the C++ structural data model is platform-specific. For example, the platform may include a general Linux platform, a general Windows platform, Android, Mac, etc. The runtime binary of the assembly of the Java structural data model is cross-platform and only needs to store a class file or a jar package.

5. The self-predefined list may be a predefinition generated by the structural data model, without limitation on a language category.

6. The configuration item list may be a defined configuration item (key-value) list.

It should be noted that the above-mentioned types of structural data models are only exemplary and other types of structural data models may also be included.

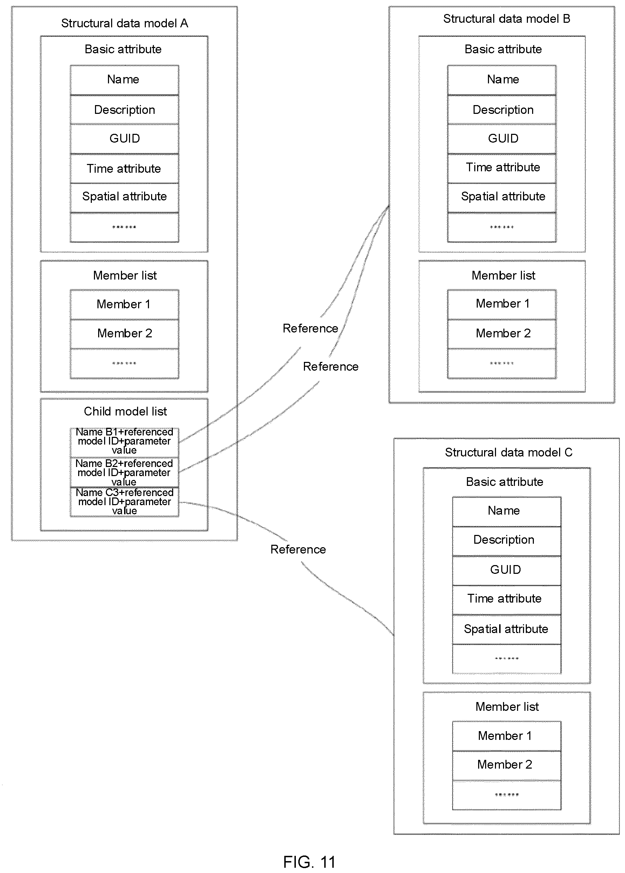

For example, FIG. 11 is a schematic diagram of a structural data model provided in the embodiments of the present disclosure. As shown in FIG. 11, the structural data model may include: a basic attribute, a member list, and a child model list. A structural data model with a child model is a composite structural data model. For example, the structural data model A in the FIG. 11 is a composite structural data model, and the structural data model B and the structural data model C are child models of the structural data model A.

In a structural data model, a basic attribute describes an inherent attribute of data, including a name, a description, a GUID, a time attribute (such as precision), a spatial attribute (such as a coordinate system, or a geometric shape), etc.; a member list describes freely defined fields, and each member describes a field name and a data type of the member, such as: member 1, member 2, etc. The child model list records identifiers of data predefinition of a structural data model referenced as a child model, and establishes a dependency relationship between the child model and the structural data model. For example, a child model list of structural data model A includes identifiers (such as "Name B1+referenced model ID+parameter value", "Name B2+referenced model ID+parameter value", "Name C3+referenced model ID+parameter value", etc.) of data predefinitions of the structural data model B and the structural data model C.

For example, a motor device has parameters such as speed, temperature, and current. A structural data model of the motor device is established. The structural data model of the motor device may include members of speed, temperature, and current. A same type of motors may be uniformly described through the structural data model of the motor device.

For another example, assuming that there are fixed disk production lines, static disk production lines, and final assembly production lines inside a compressor workshop, a structural data model of the compressor workshop is established. The structural data model of the compressor workshop may include child model inside: fixed disk production lines, static disk production lines, final assembly production lines, etc. The structural data model of the compressor workshop may describe a same type of compressor workshop models.

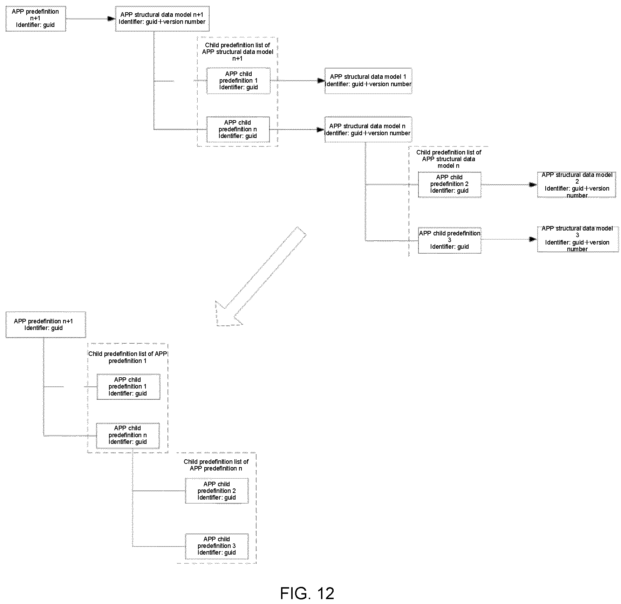

In an application scenario, based on a predefinition of an application, a hierarchical relationship between structural data models of the application may be established as shown in FIG. 12.

In an application scenario, when the software system is able to provide multiple service functions, for example, when a consensus service (referring to a highly reliable multi-instance cluster, used for multiple instances to reach consensus on something) and service data storage service (a highly reliable multi-instance cluster) may be provided, the software system may include a deployment management tool (or a deployment management application), a consensus service tool (or a consensus service application), and a data service tool (or a data service application).

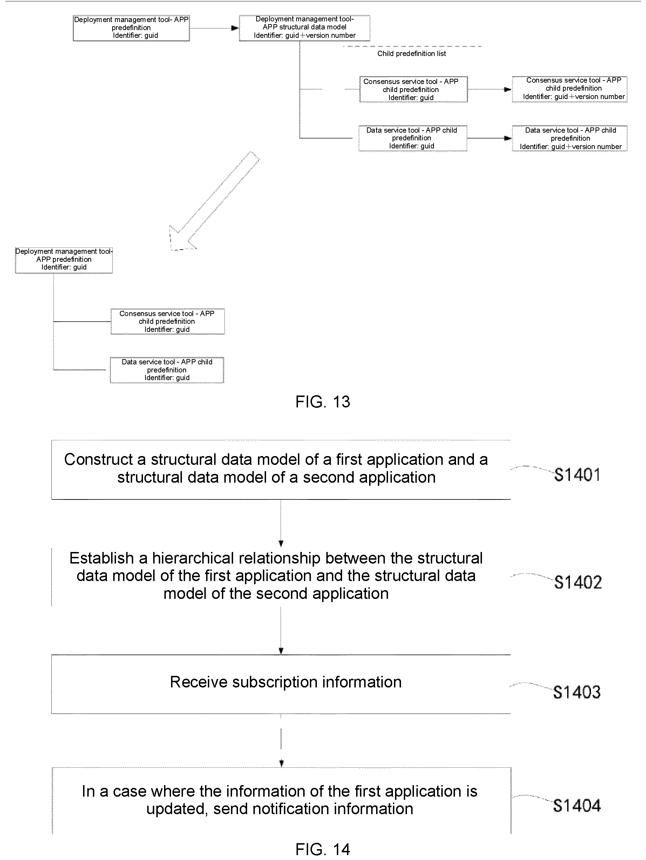

Based on the above method of establishing a hierarchical relationship between the plurality of applications, the hierarchical relationship between the deployment management tool, the consensus service tool, and the data service tool may be shown in FIG. 13.

After a parent-child relationship between the structural data model of the first application and the structural data model of the second application is established, in order to facilitate a user to understand relevant situations of an application (such as a change situation of the application, or a change situation of an attribute of the application), as shown in FIG. 14, the embodiments of the present disclosure provide an application subscription method, where the method includes S1401 to S1404.

In S1401, a structural data model of a first application and a structural data model of a second application are constructed.

In S1402, a hierarchical relationship between the structural data model of the first application and the structural data model of the second application is established.

Specifically, the above S1401 and S1402 may refer to the description of the above S101 and S102, which will not be repeated herein.

In S1403, subscription information is received.

Herein, the subscription information may be used to subscribe information of the first application. For example, the subscription information may include identifier information of the first application and information of a subscribed user (such as account information, etc.). Update information of configuration information of the first application may refer to one or more of: adding new configuration information to the configuration information of the first application (such as adding configuration information of a new application), modifying configuration information of the first application (such as updating a version number of the configuration information of the first application), and deleting the configuration information of the first application (such as deleting child configuration information for the configuration information of the first application).

For example, the subscribed user may send the subscription information to the development system through a used device. After the subscription information is received, the development system may store the subscription information and monitor whether the information of the first application is updated according to the subscription information.

Further, in general, the user may mainly focus on change events related to an application (such as an addition event, a modification event, a deletion event, etc.) and change situations in attributes of the application. The subscription information may further be used to subscribe change information of a preset event and a preset attribute. For example, the subscription information may include identifier information (or array) of a preset event, identifier information of a preset attribute, etc.

In S1404, in a case where the information of the first application is updated, notification information is sent.

Herein, the notification information is related to update information of the first application and/or the second application. For example, first information may be used to indicate that the information of the first application and/or the information of the second application has been updated. Alternatively, the first information may include the update information of the first application and/or update information of the second application. For example, the update information of the first application may include one or more of: addition information, modification information or deletion information of the structural data model and/or the configuration information of the first application. The update information of the first application may further include an updated version number of the structural data model and/or configuration information of the first application and/or an updated version number of the structural data model and/or configuration information of the second application. For example, the update information of the configuration information of the first application may include one or more of: adding new configuration information to the configuration information of the first application, modifying the configuration information of the first application, and deleting the configuration information of the first application.

In a possible implementation, when there is the hierarchical relationship between the structural data model of the first application and the structural data model of the second application, the development system may determine the update information of the structural data model of the second application according to the identifier information of the structural data model of the first application; and send update information of the structural data model of the first application and the update information of the structural data model of the second application.

In another possible implementation, when there is a hierarchical relationship between the structural data model of the first application and the configuration information of the second application, therefore the development system may determine update information of the configuration information of the second application based on the identifier information of the structural data model of the first application; and send update information of the structural data of the first application and the update information of the configuration information of the second application.

In another possible implementation, when there is a hierarchical relationship between the configuration information of the first application and the configuration information of the second application, for example, the configuration information of the second application is child configuration information of the configuration information of the first application, and the configuration information of the first application is unique parent configuration information of the configuration information of the second application, the development system may determine the configuration information of the first application based on the identification information of the structural data model of the first application; determine the configuration information of the second application based on the configuration information of the first application, and in a case where it is determined that the configuration information of the second application has changed, send update information of the configuration information of the first application and update information of the configuration information of the second application.

In an example, when the development system monitors that the information of the first application is updated, notification information may be sent to the device used by the subscribed user according to the information of the subscribed user in the subscription information.

Further, when the subscription information is used to subscribe whether a preset event occurs in the first application and attribute change information of the first application, the first information may further include whether a preset event occurs in the first application and updated attribute information of the first application.

For example, the first information may include a first indicator, and the first indicator may be used to indicate that a preset event is occurred in the first application. When the preset event does not occur in the first application, the first information may include a second indicator, and the second indicator may be used to indicate that the preset event does not occur in the first application. The first indicator and the second indicator may be a number, a letter, or a combination of a number and a letter, and the first indicator and the second indicator are different.

Based on the technical solution shown in FIG. 14, the development system may send the update information of the application to the user according to the user's application subscription requirements when a change of the application is detected, so that the user may understand the update situation of the application in a timely manner.

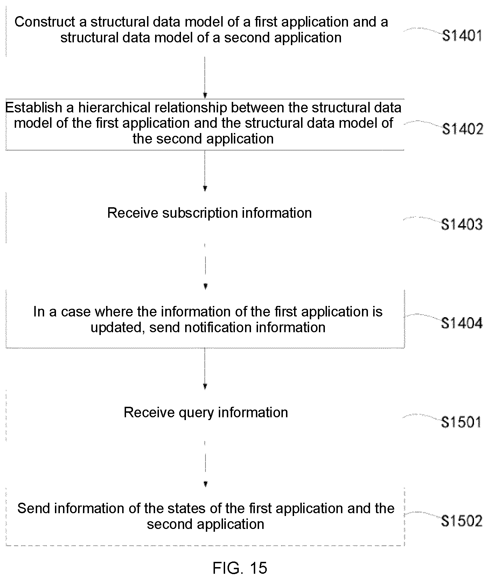

In a possible embodiment, in order to facilitate the user to query the relevant information of the first application, as shown in FIG. 15, the method provided in the embodiments of the present disclosure may further include S1501-S1502.

In S1501, query information is received.

Herein, the query information may be used to query information of states of the first application and the second application. A state of an application may include any one of: an establishment state, a running state or a termination state of a structural data model or configuration information of the application.

Furthermore, the query information may further be used to query the configuration information or attribute information of configuration information of the first application. The attribute information may include essential attribute information and optional attribute information. For example, the essential attribute information may include one or more of: identifier information of the first application and identifier information of the second application. The optional attribute information may include one or more of: identifier information of the attribute of the first application and identifier of attribute information of the second application.

In an example, the query information may include the identifier information of the first application or the identifier information of the configuration information of the first application or the version number of the structural data model of the first application. The development system may determine the configuration information or the attribute information of the configuration information of the second application from the hierarchical relationship between the first application and the second application according to the identifier information of the first application or the identifier information of the configuration information of the first application or the version number of the structural data model of the first application.

In a possible implementation, a user (may be a subscribed user or not) may send the query information to the development system through a used device. In response, the development system may receive the query information from the subscribed user.

In S1502, the information of the states of the first application and the second application is sent.

Based on the technical solution shown in FIG. 15, after the query information is received, the development system may determine relevant information of the application according to the query information. Further, the relevant information of the application is sent to a corresponding user, thus the personalized requirements of the user are met.

It can be understood that in actual implementation, a device, a user equipment, etc., in the development system described in the embodiments of the present disclosure may include one or more hardware structures and/or software modules for implementing the aforementioned corresponding application management methods, and these performed hardware structures and/or software modules may constitute an electronic device. Those skilled in the art should easily realize that the present disclosure is able to be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. A skilled person may use different methods for each specific application, to implement the described functions, but such implementation should not be considered beyond the scope of the present disclosure.

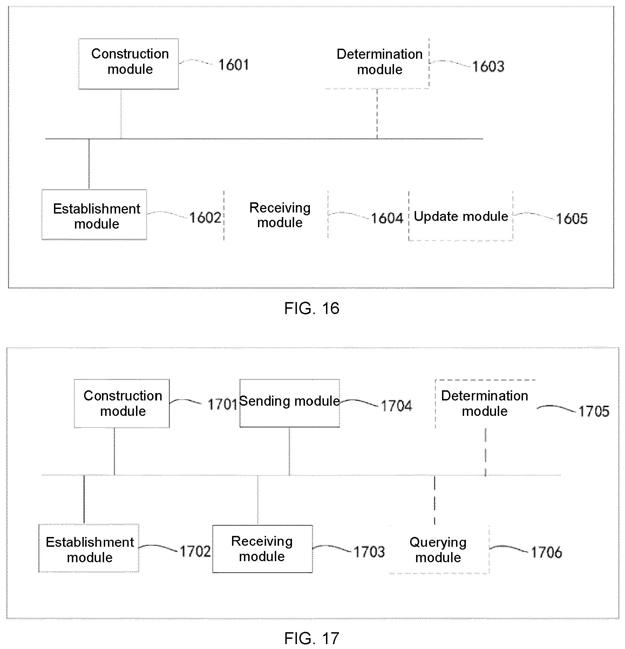

Based on this understanding, taking the hardware structure and/or software modules included in the development system as an example, the embodiments of the present disclosure provide an application management apparatus that may be applied to the above-mentioned development system (such as a hardware device corresponding to the application store) correspondingly. FIG. 16 is a structural diagram of an application management apparatus provided in the embodiments of the present disclosure. As shown in FIG. 16, the application management apparatus may include: a construction module 1601, configured to construct a structural data model of a first application and a structural data model of a second application, where a structural data model of an application includes program codes that are used to implement a function of the application; and an establishment module 1602, configured to establish a hierarchical relationship between the structural data model of the first application and the structural data model of the second application.

Optionally, the hierarchical relationship between the structural data model of the first application and the structural data model of the second application is a first parent-child relationship; and the structural data model of the second application is a child model for the structural data model of the first application.

Optionally, the structural data model of the first application in the first parent-child relationship is a unique parent structural data model for the structural data model of the second application.

In some implementations, as shown in FIG. 16, the apparatus further includes a determination module 1603, configured to determine configuration information of the first application according to the structural data model of the first application, and determine configuration information of the second application according to the structural data model of the second application.

In some implementations, the establishment module 1602 is specifically configured to establish a hierarchical relationship between the structural data model of the first application and configuration information of the second application.

Optionally, the hierarchical relationship between the structural data model of the first application and the configuration information of the second application is a second parent-child relationship; the structural data model of the first application includes the configuration information of the second application.

Optionally, the structural data model of the first application in the second parent-child relationship is a unique parent structural data model for the configuration information of the second application.

In some implementations, the establishment module 1602 is specifically configured to establish a hierarchical relationship between configuration information of the first application and configuration information of the second application.

Optionally, the hierarchical relationship between the configuration information of the first application and the configuration information of the second application is established.

Optionally, the configuration information of the first application in the third parent-child relationship is unique parent configuration information for the configuration information of the second application.

Optionally, the configuration information of the second application includes configuration information in a plurality of levels, and configuration information in each level of configuration information in the plurality of levels has unique parent configuration information.

Optionally, the configuration information in each level of configuration information in the plurality of levels has unique identifier information.

Optionally, the second application includes applications in a plurality of levels, the second application is a parent application for the applications in the plurality of levels, and an application in each level of the plurality of levels has a unique parent application.

Optionally, the applications in the plurality of levels include a third application and a fourth application, and the third application is a parent application for the fourth application.

Optionally, the configuration information of the first application includes one or more of: identifier information of the first application or a version number of the first application.

Optionally, the configuration information of the first application includes an attribute, and the attribute includes one or more of: a name of the first application, identifier information of the configuration information of the first application, identifier information and a version number of the structural data model of the first application, or a configuration parameter value in the configuration information of the first application.

Optionally, the version number of the structural data model of the first application is different from a version number of the structural data model of the second application.

In some implementations, the establishment module 1602 is specifically configured to establish a change relationship between the version number of the structural data model of the first application and the version number of the structural data model of the second application; where the change relationship includes: in a case where the version number of the structural data model of the second application changes, changing the version number of the structural data model of the first application.

Optionally, the identifier information of the first application is different from the identifier information of the second application.

In some implementations, as shown in FIG. 16, the apparatus further includes a receiving module 1604, configured to receive modification information, where the modification information is used to indicate that modification is performed on the configuration information of the second application; an update module 1605, configured to update the configuration information of the first application according to the modification information.

The embodiments of the present disclosure further provide an application subscription apparatus, which may be applied to the device in the above-mentioned development system. FIG. 17 is a structural diagram of an application subscription apparatus provided in the embodiments of the present disclosure. As shown in FIG. 17, the application management apparatus may include: a construction module 1701, configured to construct a structural data model of a first application and a structural data model of a second application, where a structural data model of an application includes program codes of the application, and the program codes of the application are used to implement a function of the application; an establishment module 1702, configured to establish a hierarchical relationship between the structural data model of the first application and the structural data model of the second application; a receiving module 1703, configured to receive subscription information that is used to subscribe information of the first application; a sending module 1704, configured to send, in a case where the information of the first application is updated, notification information that is related to update information of the first application and/or the second application.

In some implementations, the hierarchical relationship between the structural data model of the first application and the structural data model of the second application is a first parent-child relationship, and the structural data model of the second application is a child model for the structural data model of the first application; the structural data model of the first application in the first parent-child relationship is a unique parent structural data model for the structural data model of the second application. The sending module 1704 is specifically configured to determine update information of the structural data model of the second application according to identifier information of the structural data model of the first application; and send the update information of the first application and the update information of the structural data model of the second application.

In some implementations, the apparatus further includes a determination module 1705, configured to determine configuration information of the first application according to the structural data model of the first application, and determine configuration information of the second application according to the structural data model of the second application.

In some implementations, the establishment module 1702 is specifically configured to establish a hierarchical relationship between the structural data model of the first application and configuration information of the second application.

In some implementations, the hierarchical relationship between the structural data model of the first application and the configuration information of the second application is a second parent-child relationship; the structural data model of the first application includes the configuration information of the second application; the structural data model of the first application in the second parent-child relationship is a unique parent structural data model for the configuration information of the second application; where the sending module 1704 is specifically configured to: determine update information of the configuration information of the second application according to identifier information of the structural data model of the first application; and send update information of the structural data model of the first application and the update information of the configuration information of the second application.

In some implementations, the establishment module 1702 is specifically configured to establish a hierarchical relationship between configuration information of the first application and configuration information of the second application.

In some implementations, the hierarchical relationship between the configuration information of the first application and the configuration information of the second application is a third parent-child relationship; the configuration information of the second application is child configuration information for the configuration information of the first application; the configuration information of the first application in the third parent-child relationship is unique parent configuration information for the configuration information of the second application; where the sending module 1704 is specifically configured to: determine configuration information of the first application according to identifier information of the structural data model of the first application; determine the configuration information of the second application based on the configuration information of the first application; determine update information of the configuration information of the second application, and send update information of the configuration information of the first application and the update information of the configuration information of the second application.

Optionally, update information includes one or more of: addition information, modification information or deletion information of a structural data model and/or configuration information.

In some implementations, the receiving module 1703 is specifically configured to: receive query information that is used to query states of the first application and the second application; send information of the states of the first application and the second application; where a state of an application includes any one of: an establishment state, a running state or a termination state of a structural data model or configuration information of the application.

In some implementations, as shown in FIG. 17, the apparatus may further include a querying module 1706, configured to: query a state of the structural data model of the second application according to identifier information of the structural data model of the first application.

In some implementations, the querying module 1706 is specifically configured to: search for a state of configuration information of the first application according to identifier information of the structural data model of the first application; or search for a state of configuration information of the second application according to identifier information of the structural data model of the first application.

In some implementations, the querying module 1706 is specifically configured to: determine configuration information of the first application according to identifier information of the structural data model of the first application; search for a state of configuration information of the second application based on the configuration information of the first application.

As described above, various execution entities involved in the application management method may be divided into functional modules according to the above method examples in the embodiments of the present disclosure. Herein, the above integrated module may be implemented in the form of hardware, or may be implemented in the form of software functional module. In addition, it also should be noted that the division of the modules in the embodiments of the present disclosure is illustrated, which is only a logical functional division, and there may be other division manners in actual implementation. For example, division of various functional modules may be performed corresponding to various function, or two or more functions may be integrated into a processing module.

Regarding the application management apparatus in the above embodiments, where a specific manner in which each module performs operations and the beneficial effects thereof have been described in detail in the above method embodiments, which will not be repeated herein.

The embodiments of the present disclosure further provide an electronic device, where the electronic device may be a hardware device corresponding to an application store, or a device on the development side, or the user equipment mentioned above. The electronic device includes: a processor and a memory that may store instructions executable by the processor; where the processor is configured to enable the electronic device to implement the methods as described in the above-mentioned embodiments when the instructions are executed.

In the exemplary embodiments, the embodiments of the present disclosure further provide a computer-readable storage medium, and computer program instructions are stored on the computer-readable storage medium; when the computer program instructions are executed by an electronic device, the electronic device is enabled to implement the methods as described in the above-mentioned embodiments.

Optionally, the above-mentioned computer-readable storage medium may be a non-transitory computer-readable storage medium, for example, the non-transitory computer-readable storage medium may be a ROM, a random access memory (RAM), a CD-ROM, a magnetic tape, a floppy disk, an optical data storage device, etc.

In the exemplary embodiments, the embodiments of the present disclosure further provide a computer program product, including computer-readable codes, or non-volatile computer-readable storage medium carrying the computer-readable codes, where when the computer-readable codes are executed in an electronic device, a processor in the electronic device implements the methods as described in the above-mentioned embodiments.

Those skilled in the art, after considering the specification and practicing the contents disclosed herein, will easily conceive of other implementations of the present disclosure. The present disclosure aims to cover any variations, usage, or adaptive changes of the present disclosure, and those variations, usage, or adaptive changes follow general principles of the present disclosure and include common knowledge or customary technical means in the art that have not been applied for the present disclosure. The specification and the embodiments are only regarded as being exemplary, and a true scope and spirit of the present disclosure are indicated by the following claims.

It should be understood that the present disclosure is not limited to the precise structure described above and shown in the drawings, and various modifications and changes may be made without departing from its scope. The scope of the present disclosure is limited only by the appended claims.

## Claims

1. An application management method, **characterized in that** the method comprises:
constructing a structural data model of a first application and a structural data model of a second application, wherein a structural data model comprises program codes of an application, and the program codes of the application are used to implement a function of the application; and
establishing a hierarchical relationship between the structural data model of the first application and the structural data model of the second application.

2. The method according to claim 1, **characterized in that** the hierarchical relationship between the structural data model of the first application and the structural data model of the second application is a first parent-child relationship; and the structural data model of the second application is a child model for the structural data model of the first application.

3. The method according to claim 2, **characterized in that** the structural data model of the first application in the first parent-child relationship is a unique parent structural data model for the structural data model of the second application.

4. The method according to claim 1, **characterized in that** the method further comprises:
determining configuration information of the first application according to the structural data model of the first application, and determining configuration information of the second application according to the structural data model of the second application.

5. The method according to claim 4, **characterized in that** the establishing the hierarchical relationship between the structural data model of the first application and the structural data model of the second application specifically comprises:
establishing a hierarchical relationship between the structural data model of the first application and the configuration information of the second application.

6. The method according to claim 5, **characterized in that** the hierarchical relationship between the structural data model of the first application and the configuration information of the second application is a second parent-child relationship; and
the structural data model of the first application comprises the configuration information of the second application.

7. The method according to claim 6, **characterized in that** the structural data model of the first application in the second parent-child relationship is a unique parent structural data model for the configuration information of the second application.

8. The method according to claim 4, **characterized in that** the establishing the hierarchical relationship between the structural data model of the first application and the structural data model of the second application specifically comprises:
establishing a hierarchical relationship between the configuration information of the first application and the configuration information of the second application.

9. The method according to claim 8, **characterized in that** the hierarchical relationship between the configuration information of the first application and the configuration information of the second application is a third parent-child relationship;
the configuration information of the second application is child configuration information for the configuration information of the first application.

10. The method according to claim 9, **characterized in that** the configuration information of the first application in the third parent-child relationship is unique parent configuration information for the configuration information of the second application.

11. The method according to any one of claims 4 to 10, **characterized in that** the configuration information of the second application comprises configuration information in a plurality of levels, and configuration information in each level of configuration information in the plurality of levels has unique parent configuration information.

12. The method according to claim 11, **characterized in that** the configuration information in each level of configuration information in the plurality of levels has a unique identifier.

13. The method according to claim 12, **characterized in that** the second application comprises applications in a plurality of levels, the second application is a parent application for the applications in the plurality of levels, and an application in each level of the plurality of levels has a unique parent application.

14. The method according to claim 13, **characterized in that** the application in the plurality of levels comprise a third application and a fourth application, and the third application is a parent application for the fourth application.

15. The method according to claim 14, **characterized in that** the configuration information of the first application comprises one or more of: an identifier of the first application or a version number of the first application.

16. The method according to claim 14, **characterized in that** the configuration information of the first application comprises an attribute, and the attribute comprises one or more of: a name of the first application, an identifier of the configuration information of the first application, an identifier and a version number of the structural data model of the first application, or a configuration parameter value in the configuration information of the first application.

17. The method according to claim 16, **characterized in that** the version number of the structural data model of the first application is different from a version number of the structural data model of the second application.

18. The method according to claim 17, **characterized in that** the method further comprises:
establishing a change relationship between the version number of the structural data model of the first application and the version number of the structural data model of the second application;
wherein the change relationship comprises: in a case where the version number of the structural data model of the second application changes, changing the version number of the structural data model of the first application.

19. The method according to any one of claims 15 to 18, **characterized in that** an identifier of the first application is different from an identifier of the second application.

20. The method according to claim 19, **characterized in that** the method further comprises:
receiving modification information, wherein the modification information is used to indicate that modification is performed on the configuration information of the second application; and
updating the configuration information of the first application according to the modification information.

21. An application subscription method, **characterized in that** the method comprises:
constructing a structural data model of a first application and a structural data model of a second application, wherein a structural data model comprises program codes of an application, and the program codes of the application are used to implement a function of the application;
establishing a hierarchical relationship between the structural data model of the first application and the structural data model of the second application;
receiving subscription information, wherein the subscription information is used to subscribe information of the first application; and
in a case where the information of the first application is updated, sending notification information, wherein the notification information is related to update information of the first application and/or the second application.

22. The method according to claim 21, **characterized in that** the hierarchical relationship between the structural data model of the first application and the structural data model of the second application is a first parent-child relationship; and the structural data model of the second application is a child model for the structural data model of the first application; the structural data model of the first application in the first parent-child relationship is a unique parent structural data model for the structural data model of the second application;
wherein in a case where the information of the first application is updated, sending the notification information comprises:
determining update information of the structural data model of the second application according to identifier information of the structural data model of the first application; and
sending update information of the structural data model of the first application and the update information of the structural data model of the second application.

23. The method according to claim 21, **characterized in that** the method further comprises:
determining configuration information of the first application according to the structural data model of the first application, and determining configuration information of the second application according to the structural data model of the second application.

24. The method according to claim 23, **characterized in that** the establishing the hierarchical relationship between the structural data model of the first application and the structural data model of the second application specifically comprises:
establishing a hierarchical relationship between the structural data model of the first application and the configuration information of the second application.

25. The method according to claim 23, **characterized in that** the hierarchical relationship between the structural data model of the first application and the configuration information of the second application is a second parent-child relationship;
the structural data model of the first application comprises the configuration information of the second application;
the structural data model of the first application in the second parent-child relationship is a unique parent structural data model for the configuration information of the second application;
wherein in a case where the information of the first application is updated, sending the notification information comprises:
determining update information of the configuration information of the second application according to identifier information of the structural data model of the first application; and
sending update information of the structural data model of the first application and the update information of the configuration information of the second application.

26. The method according to claim 23, **characterized in that** the establishing the hierarchical relationship between the structural data model of the first application and the structural data model of the second application specifically comprises:
establishing a hierarchical relationship between the configuration information of the first application and the configuration information of the second application.

27. The method according to claim 26, **characterized in that** the hierarchical relationship between the configuration information of the first application and the configuration information of the second application is a third parent-child relationship;
the configuration information of the second application is child configuration information for the configuration information of the first application;
the configuration information of the first application in the third parent-child relationship is unique parent configuration information for the configuration information of the second application;
wherein in a case where the information of the first application is updated, sending the notification information comprises:
determining the configuration information of the first application according to identifier information of the structural data model of the first application;
determining the configuration information of the second application based on the configuration information of the first application;
determining update information of the configuration information of the second application, and sending update information of the configuration information of the first application and the update information of the configuration information of the second application.

28. The method according to any one of claims 21 to 27, **characterized in that**
update information comprises one or more of: addition information, modification information or deletion information of a structural data model and/or configuration information.

29. The method according to claim 28, **characterized in that** the method further comprises:
receiving query information, wherein the query information is used to query information of states of the first application and the second application;
sending the information of the states of the first application and the second application;
wherein a state comprises any one of: an establishment state, a running state or a termination state of a structural data model or configuration information of an application.

30. The method according to claim 29, **characterized in that** querying the information of the first application comprises:
searching for a state of the structural data model of the second application according to identifier information of the structural data model of the first application.

31. The method according to claim 29, **characterized in that** querying the information of the first application comprises:
searching for a state of configuration information of the first application according to identifier information of the structural data model of the first application; or
searching for a state of configuration information of the second application according to identifier information of the structural data model of the first application.

32. The method according to claim 29, **characterized in that** querying the information of the first application comprises:
determining configuration information of the first application according to identifier information of the structural data model of the first application;
searching for a state of configuration information of the second application based on the configuration information of the first application.

33. An application management apparatus, **characterized in that** the apparatus comprises:
a construction module, configured to construct a structural data model of a first application and a structural data model of a second application, wherein a structural data model comprises program codes of an application, and the program codes of the application are used to implement a function of the application; and
an establishment module, configured to establish a hierarchical relationship between the structural data model of the first application and the structural data model of the second application.

34. A subscription apparatus, **characterized in that** the apparatus comprises:
a construction module, configured to construct a structural data model of a first application and a structural data model of a second application, wherein a structural data model comprises program codes of an application, and the program codes of the application are used to implement a function of the application;
an establishment module, configured to establish a hierarchical relationship between the structural data model of the first application and the structural data model of the second application;
a receiving module, configured to receive subscription information, wherein the subscription information is used to subscribe information of the first application; and
a sending module, configured to send, in a case where the information of the first application is updated, notification information, wherein the notification information is related to update information of the first application and/or the second application.

35. An electronic device, **characterized by** comprising: a processor; a memory; and a computer program, wherein the computer program is stored on the memory, and the computer program is executed by the processor, to enable the electronic device to implement the method according to any one of claims 1 to 20, or the method according to any one of claims 21 to 32.

36. A computer-readable storage medium, **characterized in that** the computer-readable storage medium comprises a computer program, wherein the computer program is executed on an electronic device, to enable the electronic device to implement the method according to any one of claims 1 to 20, or the method according to any one of claims 21 to 32.

37. A computer program product, **characterized by** comprising computer-readable codes, or non-volatile computer-readable storage medium carrying computer-readable codes, wherein when the computer-readable codes are executed in an electronic device, a processor in the electronic device implements the method according to any one of claims 1 to 20, or the method according to any one of claims 21 to 32.
